(19) Europäisches Patentamt
European Patent Office
Office européen des brevets

(11) Numéro de publication : **0 210 179**
**B1**

(12) **FASCICULE DE BREVET EUROPÉEN**

(45) Date de publication du fascicule du brevet :
17.08.88

(51) Int. Cl.⁴ : **B 60 G 11/12, F 16 F 1/18**

(21) Numéro de dépôt : 85905518.8

(22) Date de dépôt : 07.11.85

(86) Numéro de dépôt international :
**PCT/FR 85/00314**

(87) Numéro de publication internationale :
**WO/8602887 (22.05.86 Gazette 86/11)**

(54) **DISPOSITIFS DE LIAISON POUR UNE LAME ELASTIQUE DE SUSPENSION D'UN VEHICULE.**

(30) Priorité : 12.11.84 FR 8417174

(43) Date de publication de la demande :
04.02.87 Bulletin 87/06

(45) Mention de la délivrance du brevet :
17.08.88 Bulletin 88/33

(84) Etats contractants désignés :
AT BE CH DE FR GB IT LI LU NL SE

(56) Documents cités :
EP-A- 0 089 858
EP-A- 0 115 696
DE-B- 1 028 436
GB-A-  724 449

(73) Titulaire : **BERTIN & CIE**
**Boîte Postale No. 3**
**F-78370 Plaisir (FR)**

(72) Inventeur : **DE GONCOURT, Louis**
**6, rue Nungesser Voisins Le Bretonneux**
**F-78190 Trappes (FR)**

(74) Mandataire : **Colas, Jean-Pierre et al**
**Cabinet de Boisse 37, avenue Franklin D. Roosevelt**
**F-75008 Paris (FR)**

## Description

L'invention concerne des dispositifs de liaison d'une lame élastique de suspension disposée entre une charge et un porteur en particulier d'un véhicule aux roues ou analogues et au châssis ayant les caractéristiques du préambule de la revendication 1 (EP-A-89 858), ladite lame étant constituée d'un matériau composite présentant dans son plan de symétrie vertical une épaisseur croissante du châssis à l'extrémité supportant la roue, sa section restant approximativement constante.

Le brevet français FR-A-2 516 455 décrit une suspension de véhicule par lame élastique. La lame, formée d'un matériau composite, présente dans son plan de symétrie verticale et sur au moins une partie de sa longueur une épaisseur croissant vers une de ses extrémités, et dans un plan horizontal une largeur décroissante, sa section transversale restant constante d'une extrémité à l'autre. Des dispositifs de liaison de la lame au support de roue et au châssis y sont décrits. Ainsi la liaison du support de roue à l'extrémité épaisse de la lame est constituée d'un insert métallique dans lequel est prévu un siège coopérant avec l'extrémité sphérique du pivot de fusée fixé à la fusée de roue et à l'extrémité de la jambe d'amortisseur. Selon un autre exemple, l'extrémité de la lame est enserrée dans un logement d'une pièce métallique comportant un alésage qui reçoit le pivot de fusée. La liaison lame-châssis comporte selon le brevet cité, une cage dans laquelle une partie parallélépipédique de la lame est maintenue par des moyens physico-chimiques ou mécaniques. Cette cage est fixée au châssis par l'intermédiaire d'un bloc d'élastomère de caractéristiques élastiques particulières.

Ces dispositifs, bien que satisfaisants, nécessitent par suite du sectionnement des fibres du matériau de la lame élastique pour le passage des inserts et des broches, un dimensionnement plus grand pour permettre une transmission convenable des efforts. Malgré cette compensation, la tenue à la fatigue est diminuée de façon significative, ce qui est un handicap.

Afin d'éviter les inconvénients précédemment décrits, l'invention vise à la réalisation de dispositifs de liaison aux roues ou analogues (skis, chenilles, appuis etc...) et au châssis ne nécessitant pas un sectionnement, ou une disposition des fibres tenant compte des inserts ou broches, en mettant à profit la forme évolutive de la lame élastique.

Les dispositifs selon l'invention sont remarquables par les caractéristiques de la seconde partie de la revendication 1. Au moins un dispositif de liaison au châssis est constitué d'une partie inférieure de maintien de la lame présentant, en projection sur un plan horizontal, une forme trapézoïdale et, dans un plan vertical, une section en forme de U, et d'une partie supérieure demi-cylindrique comportant axialement un alésage qui reçoit un dispositif amortisseur pour la fixation du dispositif au châssis, les dimensions de la partie inférieure étant prévues pour que ladite partie s'emboîte sur la partie évolutive aux emplacements de fixation de la lame.

Le dispositif de liaison à une roue est constitué d'une cage à une extrémité de laquelle est prévu un siège pour un pivot de fusée, ladite cage étant constituée de deux flasques latéraux de forme trapézoïdale formant, en projection sur un plan horizontal, un V tronqué, dont l'extrémité porte le siège, lesdits deux flasques étant reliés sur le bord inférieur de leurs parties libres par une barrette et à leur partie supérieure voisine du siège par un appui, la distance séparant le bord de la barrette inférieure du bord de l'appui supérieur étant au moins égale à l'épaisseur de l'extrémité de la lame de suspension, les dimensions de l'espace intérieur défini par la cage correspondant approximativement aux dimensions de l'extrémité de la lame de manière qu'elle puisse s'y loger.

Les explications et figures données ci-après à titre d'exemple permettront de comprendre comment l'invention peut être réalisée.

La figure 1 représente, vue de côté, une lame de suspension munie de dispositifs selon l'invention.

La figure 2 est une vue de dessus de la lame de la figure 1.

La figure 3 est une vue de dessus d'un premier exemple de réalisation d'un dispositif de liaison d'une lame de suspension au châssis.

La figure 4 est une vue en coupe selon IV-IV de la figure 3.

La figure 5 est une vue en coupe selon V-V de la figure 3.

Les figures 6, 7, 8 sont des vues respectivement de dessus, et en coupe d'un deuxième exemple de dispositif de liaison à un châssis.

La figure 9 est une vue en coupe d'un troisième exemple de réalisation d'un dispositif de liaison à un châssis.

Les figures 10 et 11 sont des vues de dessus et de côté partiellement en coupe d'un dispositif de liaison d'une lame de suspension aux roues.

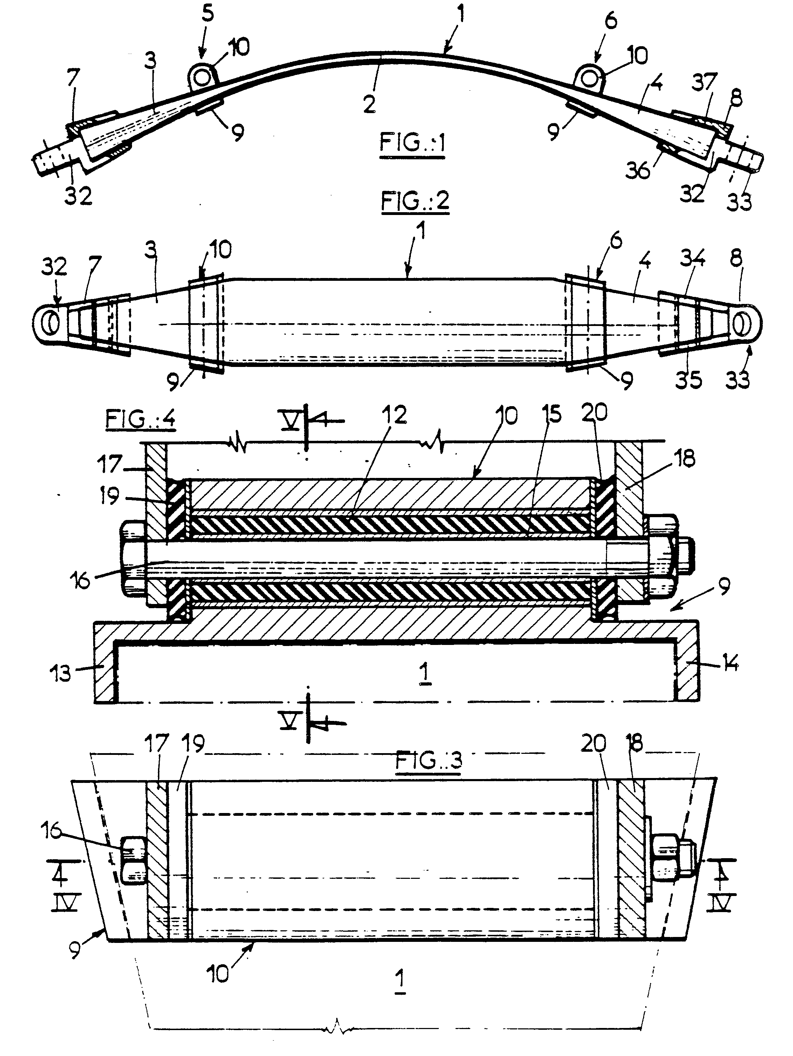

Les figures 1 et 2 représentent, vues de côté et de dessus, une lame élastique de suspension 1. Cette lame, comme décrite dans le brevet français FR-A-2 516 455, est constituée d'un matériau composite formé de fibres minérales ou organiques s'étendant sans coupure d'un bout à l'autre de la lame et noyées dans un liant approprié. Cette lame présente une partie centrale 2 parallélépipédique raccordée à deux parties d'extrémité 3, 4 de forme évolutive présentant dans le plan horizontal (figure 2) une diminution de largeur concomitante avec une augmentation d'épaisseur dans le plan vertical (figure 1), la section restant approximativement constante.

On a figuré schématiquement la position des dispositifs de liaison 5, 6 de la lame de suspension 1 au châssis et des extrémités de la lame aux roues 7, 8. Les dispositifs de liaison sont placés dans une zone évolutive de la lame de manière à bénéficier du non parallélisme de ses faces pour assurer un blocage.

Deux cas au moins sont à envisager. Dans le premier cas, la lame de suspension est soumise à une précontrainte lors du montage sur le châssis ou la caisse du véhicule (du fait que son débattement est limité par l'amortisseur). C'est le cas des véhicules de tourisme dans lesquels les efforts dans le plan vertical (poids, ressource, roulis) varient peu et où la lame reste constamment en appui.

Dans le second cas, la lame de suspension n'est pratiquement pas soumise à une précontrainte, ou est soumise à une précontrainte inférieure aux efforts maximaux dans le plan vertical. C'est le cas, par exemple, des remorques, des trains arrière de camionnettes. La lame risque de décoller de ses appuis et il est alors nécessaire de prévoir des moyens empêchant ce décollement.

Une forme de réalisation d'un dispositif de liaison d'une lame de suspension au châssis d'un véhicule, plus particulièrement adapté à une lame soumise à une précontrainte, est montrée dans les figures 3 à 5. Le dispositif, qui va être ci-après décrit, est placé dans la position du dispositif 6 des figures 1 et 2, c'est-à-dire sur les lames supportant les roues droites du véhicule.

Selon l'exemple de réalisation, le dispositif comprend une partie inférieure 9 de maintien de la lame de suspension 1, ladite partie présentant en projection sur un plan horizontal une forme trapézoïdale et dans un plan vertical une section en forme de U, l'axe de symétrie du U étant vertical et une partie supérieure demi-cylindrique 10 comportant axialement un alésage 11 qui reçoit un dispositif amortisseur 12 pour la fixation du dispositif au châssis et servant à la transmission des efforts verticaux et horizontaux.

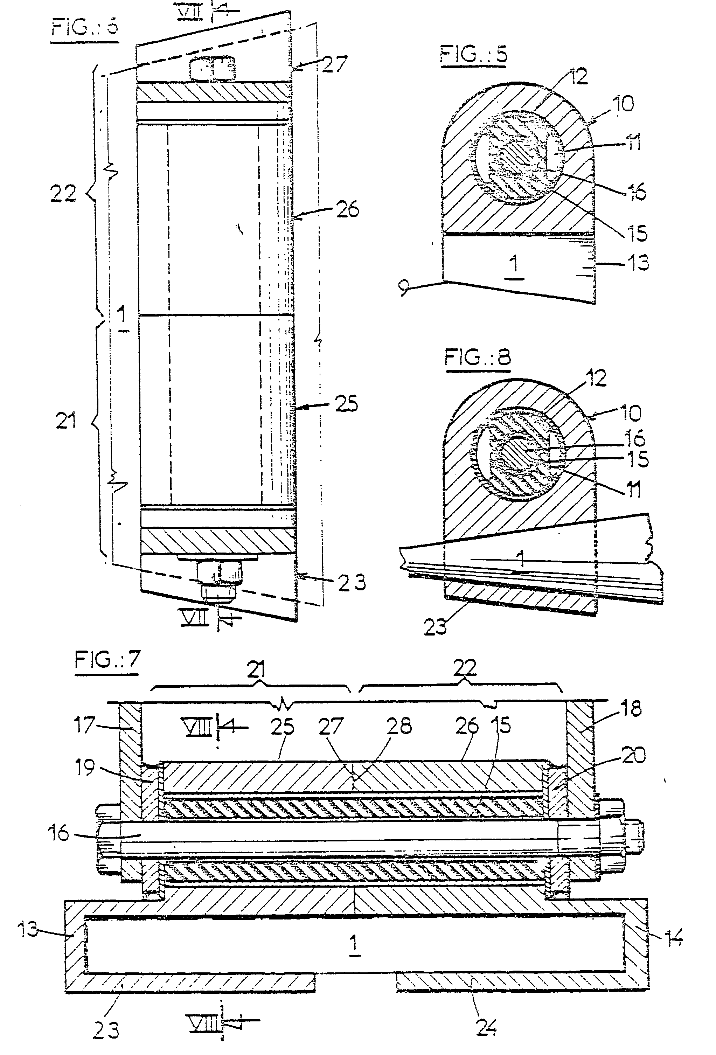

Les ailes verticales 13 et 14 (figure 5) du U forment des côtés de forme trapézoïdale dont la grande base est située du même côté que la petite base de la partie horizontale du U. Les dimensions des grandes bases et petites bases des côtés horizontaux et verticaux de la partie 9 ont approximativement les dimensions des sections correspondantes aux emplacements de fixation de la lame de suspension.

L'amortisseur 12 porte selon son axe une fourrure 15 qui reçoit une broche 16 maintenue à ses deux extrémités dans des ferrures 17, 18 solidaires de la caisse ou du châssis.

De manière connue, la partie semi-cylindrique 10 est centrée par rapport aux ferrures par des amortisseurs 19, 20 qui reprennent les efforts avant-arrière.

Le dispositif de liaison, figuré sous la référence 5 dans les figures 1 et 2, est en tout point semblable à celui précédemment décrit mais est disposé symétriquement par rapport à l'axe longitudinal du véhicule.

Les dispositifs de liaison sont positionnés de manière que lorsque la lame est précontrainte, le véhicule étant au repos avec sa charge moyenne, les ailes des parties inférieures soient en contact avec les côtés de la lame. Lorsque la suspension est soumise à des efforts, la courbure de la lame diminue ce qui a pour effet d'augmenter la distance entre les points de maintien donc entre les dispositifs. Les dispositifs étant maintenus par les broches ne peuvent tourner que d'un angle faible autour de celles-ci. Un autoblocage entre la lame et les dispositifs se produit, ce qui évite tout glissement latéral.

Les efforts auxquels la lame est soumise sont transmis directement aux dispositifs sans nécessiter un intermédiaire comme c'est le cas dans les dispositifs antérieurs où les efforts sont transmis par l'intermédiaire d'une liaison lame-dispositif de liaison telle qu'un collage, une vulcanisation ou un organe mécanique de liaison (broches, boulons, etc...).

Une deuxième forme de réalisation d'un dispositif de liaison conforme à l'invention est représentée figures 6 à 8. Les éléments semblables à ceux du dispositif précédent portent les mêmes références.

Le dispositif de liaison est constitué de deux pièces symétriques 21, 22 présentant chacune une partie inférieure 23, 24 et supérieure 25, 26.

La partie inférieure 23 ou 24 de maintien de la lame 1 présente, en projection sur un plan horizontal, une forme trapézoïdale rectangle et, dans un plan vertical, une section en forme du U à branches dissymétriques, l'axe de symétrie du U étant horizontal.

La partie supérieure 25 ou 26 est en tout point semblable à celle décrite dans l'exemple précédent, et s'étend sur la partie inférieure correspondante 23 ou 24.

Les deux pièces 21, 22 sont placées sur les bords de la lame 1 et sont serrées de manière que leurs faces planes correspondantes 27, 28 viennent en contact, une partie de la lame de suspension se trouve alors presque entièrement enfermée dans une cage trapézoïdale dont les bases rectangulaires de même surface, perpendiculaires à la lame, présentent des axes longitudinaux perpendiculaires.

Ces dispositifs de liaison procurent sur une lame telle que représentée sur les figures 1 et 2 un double autoblocage dû d'une part à la forme des dispositifs et d'autre part à leur opposition.

Par suite de l'autoblocage déjà obtenu avec un seul dispositif, celui-ci peut être avantageusement utilisé pour les lames de suspension ne supportant qu'une seule roue et correspondant approximativement à une demi-lame telle que représentée figure 2.

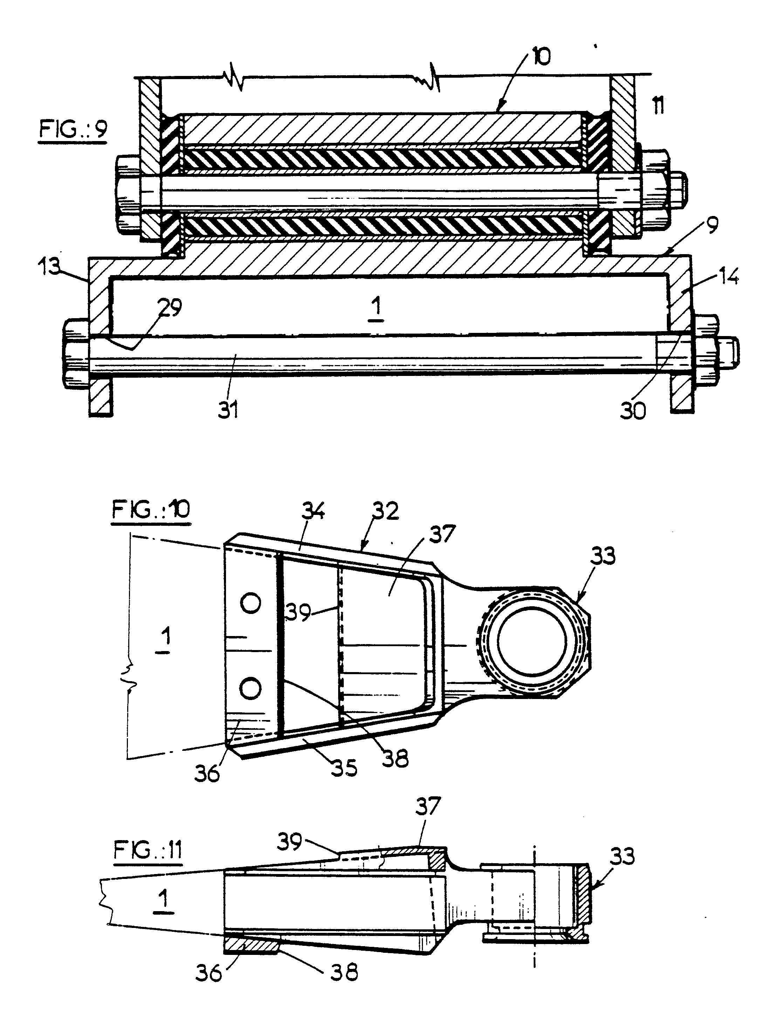

Selon une troisième forme de réalisation d'un dispositif de liaison représenté figure 9 et proche de la première forme de réalisation selon les figures 3 à 5, les ailes 13 et 14 sont prolongées vers le bas et munies d'ouvertures correspondantes 29, 30 dans lesquelles passe un moyen de maintien 31, par exemple une broche, fixée à ses extrémités par des boulons ou tout autre moyen. Cette broche maintient la lame de suspension entre les ailes de la partie inférieure et évite le décollement, la distance séparant la partie horizontale du U de la génératrice de la broche voisine de ladite partie, étant approximativement égale à l'épaisseur de la lame à l'emplacement considéré.

Ce dispositif est utilisable avec des lames sans précontrainte.

Les éléments de ce dispositif semblables à ceux des dispositifs précédemment décrits portent les mêmes références.

Les figures 10 et 11 représentent un mode de réalisation d'un dispositif de liaison d'extrémité de lame à une roue tel que ceux représentés schématiquement en 7 et 8 sur les figures 1 et 2.

Le dispositif est constitué d'une cage 32 sur une extrémité de laquelle est prévu un siège 33 pour le pivot de fusée (non représenté). La cage est constituée de deux flasques latéraux 34, 35 de forme trapézoïdale formant en projection sur un plan horizontal (figure 10) un V tronqué dont l'extrémité porte le siège. Les deux flasques sont reliés par une barrette 36 sur le bord inférieur de leurs parties libres et par un appui 37 à leur partie supérieure voisine du siège 33. La distance séparant le bord 38 de la barrette inférieure 36 du bord 39 de l'appui supérieur 37 est au moins égale à l'épaisseur de l'extrémité de la lame de suspension.

Les dimensions de l'espace intérieur, défini par la cage 32, correspondent approximativement aux dimensions de l'extrémité de la lame de manière que, lorsque ladite extrémité est logée dans la cage, elle ne puisse en être sortie que par une rotation proche de 90° autour d'un axe horizontal perpendiculaire au plan de symétrie vertical de la lame.

Les efforts verticaux sont transmis à la lame par la barrette et l'appui, et les efforts transversaux et de torsion par les flasques.

La forme de la lame crée un autoblocage dont l'effet s'ajoute à celui de la précontrainte. La disposition de la barrette 36 et de l'appui 37 permettent éventuellement le dépôt d'un film de colle qui peut être écrasé sans glissement lors du montage de la lame et permet ainsi une fixation homogène.

Les efforts vers l'extérieur sont repris par serrage contre la barrette et l'appui de la partie verticale d'épaisseur croissante de l'extrémité de la lame et les efforts vers l'intérieur par les flasques trapézoïdaux du dispositif contre les côtés verticaux et divergents de la lame vers l'axe du véhicule.

## Revendications

1. Dispositif de liaison d'une lame élastique de suspension disposée entre une charge et un porteur en particulier d'un véhicule au châssis, ladite lame présentant au moins une partie de forme évolutive, dont la largeur diminue de manière concomitante avec une augmentation d'épaisseur, du châssis à son extrémité, le dispositif de liaison au châssis comprenant une partie inférieure de maintien de la lame présentant, en projection sur un plan horizontal, une forme trapézoïdale et, dans un plan vertical perpendiculaire à l'axe longitudinal de la lame, une section en forme de U, et d'une partie supérieure pour la fixation du dispositif au châssis, caractérisé en ce que les ailes verticales (13, 14) du U forment des côtés de forme trapézoïdale dont la grande base est située du même côté que la petite base de la partie horizontale en U, les dimensions des grande et petite bases des côtés verticaux et de la partie horizontale de la partie inférieure (9) correspondant aux dimensions des sections correspondantes des emplacements de fixation de la lame.

2. Dispositif selon la revendication 1, caractérisé en ce que les parties inférieure et supérieure du dispositif sont constituées de deux pièces symétriques (21, 22) dont la partie inférieure (23, 24) présente, en projection sur un plan horizontal, une forme trapézoïdale rectangle et, dans un plan vertical, une section en forme de U à branches dissymétriques, l'axe de symétrie du U étant horizontal, les dimensions des parties inférieures (23, 24) étant prévues pour que lesdites deux parties s'emboîtent sur la partie évolutive (3, 4) aux emplacements de fixation de la lame.

3. Dispositif selon la revendication 1, caractérisé en ce que les ailes (13, 14) du U de la partie inférieure (9) sont munies d'ouvertures (29, 30) dans lesquelles passe un moyen de maintien (31), la distance séparant la partie horizontale du U de la partie du moyen voisine de ladite partie étant approximativement égale à l'épaisseur de la lame à l'emplacement considéré.

4. Dispositif selon l'une des revendications précédentes, caractérisé en ce qu'il comporte en outre un dispositif de liaison à une roue ou analogue, constitué d'une cage (32) à une extrémité de laquelle est prévu un siège (33) pour un pivot de fusée, ladite cage étant constituée de deux flasques latéraux (34, 35) de forme trapézoïdale formant, en projection sur un plan horizontal, un V tronqué, dont l'extrémité porte le siège, lesdits deux flasques étant reliés sur le bord inférieur de leurs parties libres par une barrette (36) et à leur partie supérieure voisine du siège (33) par un appui (37), la distance séparant le bord (38) de la barrette inférieure (36) du bord (39) de l'appui supérieur (37) étant au moins égale à l'épaisseur de l'extrémité de la lame de suspension, les dimensions de l'espace intérieur défini par la cage (32) correspondant approximativement aux dimensions de l'extrémité de la lame de manière qu'elle puisse s'y loger.

## Claims

1. A device for connecting an elastic suspension leaf arranged between a load and a carrier, particularly of a vehicle, to the chassis, the said leaf having at least one part of evolute shape, the width of which decreases in accompaniment with an increase in thickness from the chassis to its end, the device for connecting to the chassis comprising a lower part which retains the leaf and which has a trapezoidal shape in projection in a horizontal plane and a U-shaped cross-section in a vertical plane perpendicular to the longitudinal axis of the leaf, and an upper part for fastening the device to the chassis, characterized in that the vertical wings (13, 14) of the U form trapezoidal sides, the large base of which is located on the same side as the small base of the horizontal part of the U, the dimensions of the large and small bases of the vertical sides and of the horizontal part of the lower part (9) corresponding to the dimensions of the corresponding cross-sections of the fastening points of the leaf.

2. A device as claimed in claim 1, characterized in that the lower and upper parts of the device consist of two symmetrical pieces (21, 22), the lower part (23, 24) of which has, in projection in a horizontal plane, the form of a right-angled trapezium and, in a vertical plane, a U-shaped cross-section with asymmetric branches, the axis of symmetry of the U being horizontal, and the dimensions of the lower parts (23, 24) are intended to ensure that the said two parts fit onto the evolute part (3, 4) at the fastening points of the leaf.

3. A device as claimed in claim 1, characterized in that the wings (13, 14) of the U of the lower part (9) are provided with orifices (29, 30), through which passes a retention means (31), and the distance separating the horizontal part of the U from the part of the means adjacent to the said part is approximately equal to the thickness of the leaf at the point in question.

4. A device as claimed in one of the preceding claims, characterized in that the said device also has a device for connecting to a wheel or the like, consisting of a holder (32), at one end of which a seat (33) is provided for a hub-axle spindle, the said holder consisting of two trapezoidal side plates (34, 35) which, in projection in a horizontal plane, form a truncated V, the end of which carries the seat, the said two plates being connected at the lower edge of their free parts by means of a bar (36) and in their upper part adjacent to the seat (33) by means of a stop (37), the distance separating the edge (38) of the lower bar (36) from the edge (39) of the upper stop (37) being at least equal to the thickness of the end of the suspension leaf, and the dimensions of the inner space defined by the holder (32) corresponding approximately to the dimensions of the end of the leaf so that the latter can be accommodated in it.

**Patentansprüche**

1. Vorrichtung zur Verbindung einer zwischen einer Last und einem Träger, insbesondere eines Fahrzeugs, angeordneten Aufhängungs-Blattfeder mit dem Rahmen, wobei die Blattfeder mindestens einen Teil mit sich entwickelnder Form mit vom Rahmen zu ihrem Ende abnehmender Breite und gleichzeitig zunehmender Dicke besitzt und die Vorrichtung zur Verbindung mit dem Rahmen ein Unterteil zum Halt der Blattfeder, das in einer Projektion auf eine horizontale Ebene trapezförmig ist und in einer vertikalen, zur Längsachse der Blattfeder senkrechten Ebene einen U-förmigen Querschnitt hat, und ein Oberteil zur Befestigung der Vorrichtung am Rahmen aufweist, dadurch gekennzeichnet, daß die vertikalen Schenkel (13, 14) des U's trapezförmige Seiten bilden, deren große Basis auf derselben Seite wie die kleine Basis des horizontalen Teils des U's gelegen ist, wobei die Abmessungen der großen und der kleinen Basis der vertikalen Seiten und des horizontalen Teils des Unterteils (9) den Abmessungen der entsprechenden Querschnitte der Befestigungsstellen der Blattfeder entsprechen.

2. Vorrichtung nach Anspruch 1, dadurch gekennzeichnet, daß das Unterteil und das Oberteil aus zwei symmetrischen Teilen (21, 22) bestehen, deren Unterteil (23, 24) in einer Projektion auf eine horizontale Ebene die Form eines rechtwinkligen Trapezes und in einer vertikalen Ebene einen Querschnitt in Form eines U's mit unsymmetrischen Schenkeln hat, wobei die Symmetrieachse des U's horizontal ist, und daß die Abmessungen der Unterteile (23, 24) so gewählt sind, daß diese auf den Teil (3, 4) mit sich entwickelnder Form an den Befestigungsstellen der Blattfeder aufgepaßt sind.

3. Vorrichtung nach Anspruch 1, dadurch gekennzeichnet, daß die Schenkel (13, 14) des U's des Unterteils (9) mit Öffnungen (29, 30) versehen sind, in die ein Halteorgan (31) eintritt, wobei der Abstand des horizontalen Teils des U's von dem diesem benachbarten Teil des Halteorgans annähernd gleich der Dicke der Blattfeder an der betreffenden Stelle ist.

4. Vorrichtung nach einem der vorhergehenden Ansprüche, gekennzeichnet durch eine Vorrichtung zur Verbindung mit einem Rad oder dergl., die aus einem Käfig (32) besteht, an dessen einem Ende ein Lager (33) für einen Achsschenkelbolzen vorgesehen ist und der aus zwei trapezförmigen Seitenwangen (34, 35) besteht, die in einer Projektion auf eine horizontale Ebene ein abgestumpftes V bilden, dessen Ende das Lager trägt, und an der Unterkante ihrer freien Teile durch einen Steg (36) und in ihrem oberen, dem Lager (33) benachbarten Teil durch eine Abstützung (37) miteinander verbunden sind, wobei der Abstand der Kante (38) des unteren Stegs (36) von der Kante (39) der oberen Abstützung (37) mindestens gleich der Dicke Blattfederendes ist und die Abmessungen des von dem Käfig (32) abgegrenzten Innenraums annähernd den Abmessungen des Blattfederendes entsprechen, so daß es in diesen einsetzbar ist.

0 210 179

**0 210 179**

FIG.: 6

FIG.: 5

FIG.: 8

FIG.: 7

2

FIG.: 9

10

11

13

29

1

31

30

9

14

FIG.: 10

34

32

37

33

39

1

36

35

38

FIG.: 11

37

39

33

1

36

38